# FASCICULE DE BREVET EUROPEEN

(11) **EP 2 611 578 B1**
(45) Date de publication et mention de la délivrance du brevet: **07.01.2015**
(21) Numéro de dépôt: 11764807.1
(22) Date de dépôt: 30.08.2011
(51) Int. Cl.: B64C 25/26, B25B 9/00, B25J 1/04, B64F 5/00

(54) **PROCÉDÉ DE PIVOTEMENT À DISTANCE ET OUTIL DE MISE EN OEUVRE**
FERNGESTEUERTES SCHWENKVERFAHREN UND WERKZEUG ZU SEINER UMSETZUNG
REMOTE-PIVOTING METHOD AND TOOL FOR IMPLEMENTING SAME

(30) Priorité: 31.08.2010 FR 1056891
(43) Date de publication de la demande: 10.07.2013
(73) Titulaire: Airbus SAS, 31700 Blagnac (FR); Airbus Operations SAS, 31060 Toulouse (FR)
(72) Inventeur: RODRIGUES-MORGADO, Cédric, F-31200 Toulouse (FR); HERAL, Jean-Marc, F-31150 Bruiguieres (FR)
(74) Mandataire: Gevers France
(86) Numéro de dépôt international: PCT/FR2011/051981
(87) Numéro de publication internationale: WO 2012/028815

(56) Documents cités:
- FR-A- 1 273 954
- US-A- 3 346 293
- US-A- 4 057 276
- US-A- 4 374 600
- US-A- 4 483 562
- US-A1- 2007 152 457
- US-B1- 6 652 013

## Description

### DOMAINE TECHNIQUE

L'invention se rapporte à un procédé de pivotement d'un élément à distance, ainsi qu'un outil apte à mettre en oeuvre ce procédé. L'invention s'applique tout particulièrement lorsque l'élément est agencé dans un milieu d'accès difficile. Un tel procédé et un tel outil sont connus par exemple du document US-A-3 346 293.

Ainsi, en application principale, mais non exclusive, l'invention concerne la mise en position de verrouillage par pivotement d'un crochet de maintien de train d'atterrissage d'avion. Classiquement, le train d'atterrissage d'un avion est verrouillé en vol en position pliée dans sa case par un crochet de maintien du train, appelé crochet de train d'atterrissage de fuselage, en abrégé crochet BLG (initiales de « Body Landing Gear » en terminologie anglaise).

En cas de grave problème hydraulique ou électrique sur l'avion, une commande de détresse du train actionne le crochet pour déverrouiller le train qui peut alors se déployer, par exemple par gravité, pour un atterrissage d'urgence. Afin de tester la fiabilité de cette commande sur une chaîne d'assemblage ou en service, le crochet est préalablement verrouillé manuellement alors que le train d'atterrissage est sorti.

### ETAT DE LA TECHNIQUE

Jusqu'à présent, un tel verrouillage manuel se fait par un opérateur sur site. En effet, l'encombrement entre le fût du train et le vérin de relevage du train est tel que l'intervention se fait habituellement dans la case du train. Pour permettre à l'opérateur d'atteindre le crochet, il est nécessaire de prévoir une série d'outils tels qu'un harnais de sécurité, un enrouleur à fil à fixer sur le harnais et un ancrage dans la case pour ancrer l'enrouleur. Une fois l'ancrage fixé, le fil de l'enrouleur est tiré pour récupérer le mousqueton et l'accrocher au harnais de sécurité porté par l'opérateur qui peut alors monter sur le train d'atterrissage et se hisser sur la case du train d'atterrissage.

Cette opération présente des risques au niveau de la sécurité, mobilise deux opérateurs et nécessite le montage d'un nombre important d'éléments, ce qui mobilise également du temps et augment le risque de défaut de montage.

### EXPOSE DE L'INVENTION

L'invention vise à s'affranchir de ces inconvénients par un verrouillage à distance, sans que l'opérateur n'ait à monter sur le train ni sur la case du train. Pour ce faire, il est prévu de pivoter le crochet par un moyen faisant levier et présentant une configuration adaptée aux contraintes d'accessibilité.

Plus précisément, la présente invention a pour objet un procédé de pivotement à distance d'un élément monté dans une structure, consistant à exercer un effet de levier sur l'élément par une commande couplée à une liaison en prise avec l'élément pour le faire pivoter dans un plan de pivotement en prenant appui sur la structure, et à réaliser un déport angulaire sur cette liaison dans un plan différent du plan de pivotement, en particulier perpendiculaire à ce plan, dans lequel se produit l'effet de levier afin de rendre la commande opérationnelle à distance.

Un tel déport permet avantageusement d'atteindre l'élément à faire pivoter à distance lorsqu'un encombrement rend l'élément inaccessible par voie directe, alors qu'une liaison rectiligne ne le permet pas et donc n'est pas opérationnelle. Ainsi, dans le cas du crochet de verrouillage décrit ci-dessus, la présence du train d'atterrissage rend quasiment impossible l'accès du crochet par tout outil à manche droit à distance c'est-à-dire, dans ce cas, depuis le sol.

Selon des particularités avantageuses, le procédé selon l'invention prévoit d'orienter le déport selon des angles multiples et/ou de rendre la liaison télescopique pour adapter la liaison à une configuration d'accès à distance donnée ou une application particulière.

L'invention se rapporte également à un outil apte à mettre en oeuvre ce procédé. Un tel outil comporte une tête munie d'un bras de levier, un premier tronçon de perche tubulaire couplée à la tête, un coude tubulaire liant le premier tronçon à un deuxième tronçon de perche tubulaire, une tige de commande en prise mobile sur le deuxième tronçon et un moyen souple reliant la tige de commande au bras de levier via une liaison de guidage solidaire du premier tronçon.

Selon certains modes de réalisation préférés :
- le bras de levier peut comprendre un manche couplé à un support central monté en rotation sur un axe entre deux patins de guidage du support, le support et les patins pouvant être avantageusement recouverts d'un revêtement en téflon afin de ne pas endommager l'élément à pivoter et la structure sur laquelle est montée ledit élément ;
- le coude se compose de deux parties tubulaires, pouvant être de longueurs sensiblement égales, ces parties tubulaires formant entre elles un angle déterminé de déport, chaque partie de coude étant ajustée à chaque tronçon de perche correspondante avec lequel elle est en liaison par des moyens de blocage amovibles;
- les tronçons de perche et les parties de coude présentent des lumières sur des portions annulaires, ces lumières se superposent lorsque les tronçons de perche et les parties de coude sont en position nominale et des broches, servant de moyens de blocage amovibles, sont introduites transversalement à travers un jeu de lumières diamétralement opposées pour bloquer les tronçons de perche selon un angle de coude, au moins deux jeux de lumières étant avantageusement prévus sur au moins une partie de coude et le tronçon de perche correspondant pour varier l'orientation de l'angle de déport et ainsi s'adapter à l'encombrement de l'environnement ;
- les parties de coude sont articulées entre elles autour d'un axe par une liaison vis/écrou pouvant être bloquée selon un angle de déport déterminé par serrage.

### BREVE DESCRIPTION DES FIGURES

D'autres données, caractéristiques et avantages de la présente invention apparaîtront à la lecture de la description non limitée qui suit, en référence aux figures annexées qui représentent, respectivement :
- les figures 1 et 1a, une vue globale d'un train d'atterrissage dans sa case maintenu en position par un boîtier de verrouillage, le boîtier étant agrandi sur la figure 1 a ;
- la figure 2, une vue globale d'un exemple de perche selon l'invention,
- la figure 3 une vue de la tête de l'outil et du premier tronçon de perche selon la figure 2,
- la figure 4, une vue du coude de liaison avec les tronçons de perche selon la figure 2,
- les figures 5 et 5b, des vues supérieure et frontale d'une version alternative du coude de liaison ;
- la figure 6, une vue de la tête et du premier tronçon engagés dans le boîtier de verrouillage, et
- la figure 7, une vue d'intérieur de case de train d'atterrissage avec un crochet et une perche selon l'invention installée pour pivoter le crochet en position fermée.

### DESCRIPTION DETAILLEE

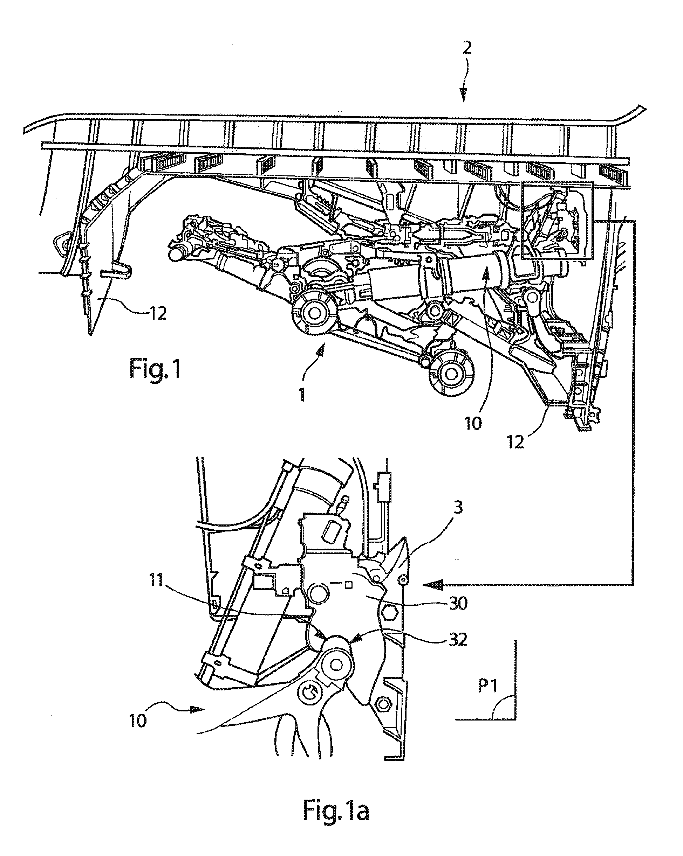

En référence à la vue globale de la figure 1, un train d'atterrissage 1 d'avion est représenté en position repliée dans sa case 2. Un boîtier de verrouillage 3 maintient cette position repliée en phase de vol de l'avion, en particulier par crochetage du fût principal 10 du train 1. Comme cela apparaît plus précisément sur la figure 1a, le boîtier 3 comporte un crochet 30 en position de verrouillage d'une barre 11 portée par deux bras 12 soudées au fût 10. La barre 11 est intégrée dans un logement 32 formé par le crochet 30 en position fermée de verrouillage.

Une commande électrique (non représentée) pilote le pivotement du crochet 30 dans un plan de pivotement P1 entre deux positions : la position fermée de verrouillage illustrée par les figures 1 et 1a, et une position ouverte qui permet de libérer la barre 11 et donc le train 1. En cas d'atterrissage d'urgence, le crochet 30 pivote en position ouverte et les trappes 12 de la case du train s'ouvrent simultanément, le train se déployant alors en position d'atterrissage.

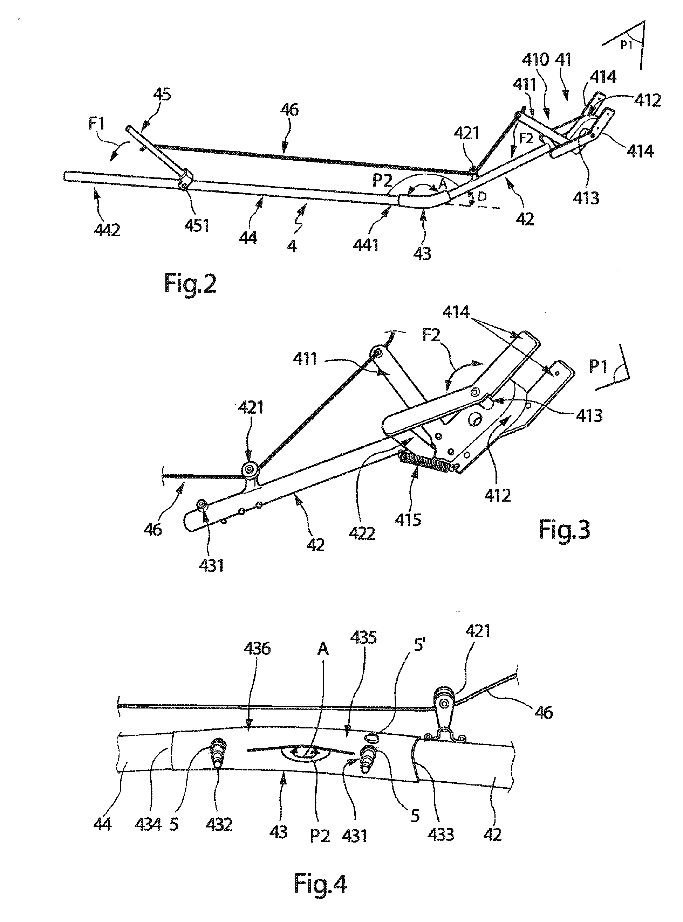

Afin de vérifier la capacité du crochet à s'ouvrir en cas de détresse pour libérer le train, l'invention prévoit de tester cette commande d'ouverture au sol après une fermeture manuelle du crochet à l'aide d'un outil de structure particulière, permettant à l'opérateur d'agir à distance. La figure 2 illustre globalement la structure d'un tel outil 4. Cet outil comporte une tête 41 de liaison avec le boîtier de verrouillage et son crochet, un premier tronçon tubulaire de perche 42 solidaire de la tête 41 et monté sur un coude 43 formant un angle de coude déterminé « A » dans un plan P2, et un deuxième tronçon tubulaire de perche 44 couplé, à une extrémité 441, au coude 43 et sur lequel une tige de commande 45 est articulée autour de son axe 451, à proximité de l'autre extrémité 442 du deuxième tronçon. Un déport D est formé entre les tronçons de perche 42 et 44, ce déport D étant un angle supplémentaire de l'angle de coude A.

Une cordelette de commande 46 relie la tige de commande 45 à un manche 411 de la tête 41, en passant par une poulie de guidage 421 solidaire du premier tronçon 42. Lorsque la tige de commande 45 est tirée par l'opérateur selon la flèche F1 autour de son axe 451, le manche 411 de la tête se déplace selon une trajectoire (flèche F2) dans un plan P1 par l'action de la cordelette 46, le plan P1 étant sensiblement perpendiculaire au plan P2 dans cet exemple illustré.

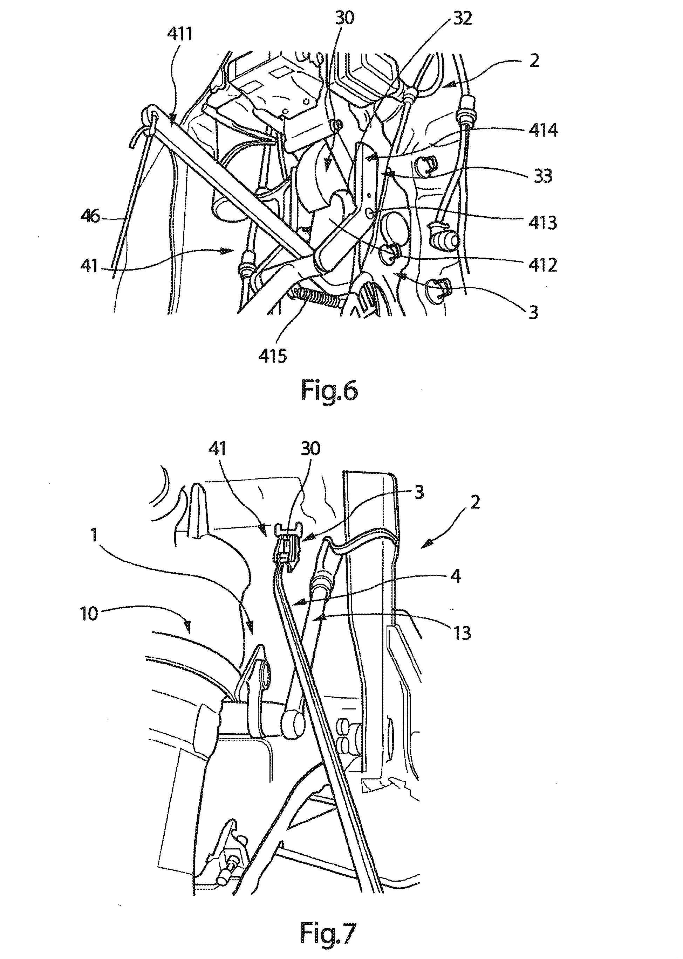

La figure 3 montre plus précisément la tête 41 sur laquelle le premier tronçon 42 est fixé directement. La tête 41 se compose d'un bras de levier 410 qui comprend un support central 412 et le manche 411 fixé au support. Ce support 412 est monté en rotation sur un cylindre 413 relié en extrémités à des patins 414 de guidage du support 412 dans le boîtier de verrouillage 3 (voir figure 6). Le premier tronçon de perche 42 est solidarisé à un autre cylindre 422, parallèle au cylindre 413 et qui relie également les deux patins de guidage 414. Les patins sont avantageusement recouverts d'un revêtement en téflon. Le bras de levier 410 peut ainsi pivoter dans le plan P1 qui coïncide avec le plan de pivotement du crochet 30.

Le support 412 est également recouvert d'un revêtement en téflon afin de ne pas endommager le crochet du boîtier sur lequel il sera en prise. Lorsque l'opérateur tire sur la cordelette 46, le manche 411 et le support 412 tournent autour du tube 413 (flèche F2). Un ressort de rappel 415 permet de doser la force à exercer sur la cordelette 46 et de revenir à la position de repos initiale lorsque l'opérateur cesse de tirer sur la cordelette.

La figure 3 fait également apparaître la poulie de guidage 421 de la cordelette 46 jusqu'au manche 411, cette poulie étant solidarisée au premier tronçon 42, ainsi qu'une broche à bille 431 disposée transversalement dans le tronçon 42 et destinée à coupler ce premier tronçon 42 au coude 43, comme illustré par la figure 4. Sur cette figure 4, le coude 43 relie le premier tronçon 42 au deuxième tronçon 44 par introduction des tronçons dans chaque extrémité 433 et 434 du coude 43, le diamètre intérieur du coude et les diamètres extérieurs des tronçons étant réglés pour permettre une liaison ajustée de ces tubes. La liaison peut être réalisée également par vissage ou équivalent. Sur la figure 4, apparaît également la poulie de guidage 421 de la cordelette 46.

Le coude 43 a une forme tubulaire qui a été préalablement courbée en son milieu par cintrage ou par soudage selon un angle de coude obtus A prédéterminée, égal à 164° dans l'exemple, pour réaliser un déport de 16° du premier tronçon 42 prolongé selon le même axe par la tête 41 par rapport au deuxième tronçon 44. Ce déport entre les deux tronçons est réalisé dans un plan P2 sensiblement perpendiculaire au plan P1 de pivotement du bras de levier 411 et du crochet 30 (voir figure 3).

Dans chacune des deux parties 435 et 436 du coude 43, ainsi que dans les tronçons 42 et 44 en regard, un jeu de lumières 5 diamétralement opposées a été découpé. Par ces lumières, deux broches à bille 431 et 432 sont introduites afin de sécuriser les liaisons entre le coude 43 et les tronçons 42, 44, tout en restant amovible.

Un autre jeu de lumières 5' est également prévu dans le tronçon 42 de perche (une lumière 5' est représentée par transparence à travers le coude) afin de bloquer l'ensemble du coude 43 et du deuxième tronçon 44 par rotation autour du premier tronçon. La rotation est effectuée après avoir retiré la broche 431 et le coude est bloqué par introduction de cette broche 431 dans les lumières 5'. Le plan P2 du coude n'est alors plus perpendiculaire au plan de pivotement P1.

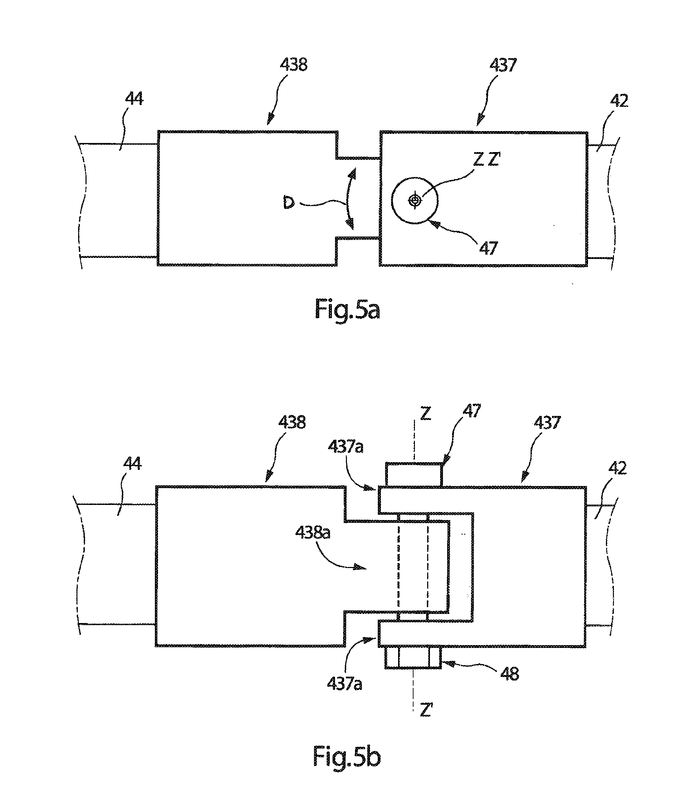

Selon une version alternative illustrée par les vues supérieure et frontale des figures 5a et 5b, des parties de coude 437 et 438 sont articulées entre elles autour d'un axe Z'Z par une liaison vis/écrou 47 et 48. Les tronçons de perche 42 et 44 sont vissés dans les parties de coude 437 et 438. L'angle du coude A est alors rendu variable par rotation autour de l'axe Z'Z et est bloqué selon un déport déterminé par serrage du système vis/écrou. Ce serrage écrase la mâchoire formée par les avancées 437a de la partie de coude 437 contre l'avancée 438a de la partie de coude 438.

En référence à la figure 6, montrant partiellement l'intérieur d'une case 2 sans le train, le support central 412 de la tête 41 est conformé pour pouvoir s'intégrer dans le logement 32 formé par le crochet 30 -après guidage à l'aide des patins 414 en appui sur des parois 33 du boîtier 3 - sans rester bloqué dans ce logement. Lorsque l'opérateur tire sur la cordelette 46, le support 412, en prise dans le crochet 30, tourne autour du cylindre 413. Le crochet 30, entraîné par le support 412, pivote vers sa position fermée. L'outil peut être alors désengagé du crochet 30.

La figure 7 montre une vue intérieure de la case 2 de train d'atterrissage 1 équipé du crochet 30, permettant de mieux saisir l'effet produit par le déport de l'outil 4 conformément à l'invention. Sur cette figure, l'outil 4 est installé dans le boîtier 3 pour permettre le pivotement du crochet 30. La figure 6 montre bien que les positions relatives du fût 10 et du vérin de relevage 13 du train 1 ne permettent pas d'atteindre le boîtier 3 directement - c'est-à-dire de manière rectiligne - à partir de l'extérieur de la case 2. Le déport réalisé sur l'outil 4 permet à la tête 41 de s'intégrer sans difficulté au boîtier de verrouillage 3 et au crochet 30.

L'invention n'est pas limitée aux exemples de réalisation décrits et représentés. Ainsi, au moins l'un au moins des tronçons de perche peut présenter des portions à coulissement télescopique pour ajuster la longueur de l'outil à une longueur déterminée.

Par ailleurs, les parties de coude peuvent articulées entre elles par une liaison à rotule pouvant être bloquée par des mâchoires selon toute orientation prédéterminée dans un angle solide donné.

En outre, le coude peut présenter deux ou plus de deux cintrages de forme variée (du dièdre à la courbure continue). Plusieurs coudes peuvent être prévus, par exemple un deuxième coude orientable dans un plan variable par tout mécanisme de rotation (vissage, roulements, etc.) d'une des parties du deuxième coude dans un tronçon de perche, et blocage de cette rotation par tout moyen (bouton poussoir, crochet, etc.) afin de permettre une orientation mieux adaptée à une configuration d'accès donnée. Le mécanisme de rotation et les moyens de blocage de ce mécanisme peuvent alternativement équipés la première partie 435 du coude 43

De plus, la cordelette peut être remplacée par tout moyen équivalent : tringles, rubans, lamelles, etc. Les tronçons de perche peuvent ne pas être tubulaires mais de section oblongue ou rectangulaire.

Par ailleurs, l'invention s'applique à tout contexte pour lequel, pour des raisons d'accès difficile pouvant être liées à des conditions de sécurité, il est avantageux d'opérer à distance, par exemple pour des travaux du bâtiment en hauteur, ou plus généralement dans le domaine des travaux publics. Le support de la tête de l'outil selon l'invention est adapté à l'élément devant être basculé ou pivoté, cet élément pouvant être un levier, une tirette, un écrou, etc.

## Revendications

1. Procédé de pivotement à distance d'un élément (30) monté dans une structure (3), consistant à exercer un effet de levier (410) sur l'élément par une commande (46) couplée à une liaison (4) en prise avec l'élément (30) pour le faire pivoter dans un plan de pivotement (P1) en prenant appui sur la structure (3), et à réaliser un déport angulaire (A) sur cette liaison (4) dans un plan (P2) différent du plan de pivotement (P1) dans lequel se produit l'effet de levier (410) afin de rendre la commande (46) opérationnelle à distance.

2. Procédé de pivotement selon la revendication 1, dans lequel le déport angulaire (A) est réalisé dans un plan (P2) sensiblement perpendiculaire au plan de pivotement (P1).

3. Procédé de pivotement selon la revendication 1, dans lequel le déport angulaire (A) est orienté selon des angles multiples et/ou la liaison (4) est télescopique pour s'adapter à une configuration d'accès à distance donnée.

4. Outil de pivotement pour la mise en oeuvre du procédé selon l'une quelconque des revendications 1 à 3, ledit outil de pivotement comportant une tête (41) munie d'un bras de levier (410) apte à pivoter dans un plan de pivotement (P1), un premier tronçon de perche (42) couplée à la tête (41), un coude (43) liant le premier tronçon (42) à un deuxième tronçon de perche (44), et formant un angle (A) entre les tronçons (42, 44) dans un plan (P2) différent du plan de pivotement (P1), une tige de commande (45) en prise mobile sur le deuxième tronçon (44) et un moyen souple (46) reliant la tige de commande (45) au bras de levier (410) via une liaison de guidage (421) solidaire du premier tronçon (42).

5. Outil de pivotement selon la revendication précédente, dans lequel le bras de levier (410) comprend un manche (411) couplé à un support central (412) monté en rotation sur un axe (451) entre deux patins de guidage (421) du support (412).

6. Outil de pivotement selon la revendication précédente, dans lequel le support (412) est recouvert d'un revêtement en téflon afin de ne pas endommager l'élément à pivoter (30).

7. Outil de pivotement selon l'une quelconque des revendications 4 à 6, dans lequel le coude se compose de deux parties (435, 436) tubulaires et de longueurs sensiblement égales, ces parties tubulaires formant entre elles un angle déterminé de déport (D), chaque partie de coude (435, 436) étant ajustée à chaque tronçon de perche correspondante (42, 44) avec lequel elle est en liaison par des moyens de blocage amovibles (431, 432).

8. Outil de pivotement selon la revendication précédente, dans lequel les tronçons de perche (42, 44) et les parties de coude correspondantes (435, 436) présentent des lumières (5, 5') sur des portions annulaires, ces lumières se superposant lorsque les tronçons de perche (42, 44) et les parties de coude (435, 436) sont en position nominale de liaison et des broches (431, 432), servant de moyens de blocage amovibles, étant introduites transversalement à travers un jeu de lumières (5, 5') diamétralement opposées pour bloquer les tronçons de perche selon un angle de coude (A).

9. Outil de pivotement selon la revendication précédente, dans lequel au moins deux jeux de lumières (5, 5') sont prévus sur au moins une partie de coude (435) et le tronçon de perche correspondant (42) pour varier l'orientation du déport (D).

10. Outil de pivotement selon l'une quelconque des revendications 4 à 8, dans lequel les parties de coude (437, 438) sont articulées entre elles autour d'un axe (Z'Z) d'une liaison vis/écrou (47, 48) pour varier l'angle de déport (D) et bloquer un angle de déport déterminé par serrage.

11. Outil de pivotement selon l'une quelconque des revendications 4 à 8, dans lequel les parties de coude sont articulées entre elles par une liaison à rotule pouvant être bloquée par des mâchoires selon toute orientation prédéterminée dans un angle solide donné.

## Patentansprüche

1. Verfahren zum Schwenken auf Distanz eines Elements (30), das in eine Struktur (3) montiert ist, das darin besteht, eine Hebelwirkung (410) auf dem Element durch eine Steuerung (46), die mit einer Verbindung (4) im Eingriff mit dem Element (30) gekoppelt ist, auszuüben, um es in einer Schwenkebene (P1) unter Aufstützen auf der Struktur (3) schwenken zu lassen und einen Winkelversatz (A) auf dieser Verbindung (4) in einer Ebene (P2), die von der Schwenkebene (P1) unterschiedlich ist, in der die Hebelwirkung (410) eintritt, auszuführen, um die Steuerung (46) auf Entfernung betriebsfähig zu machen.

2. Schwenkverfahren nach Anspruch 1, bei dem der Winkelversatz (A) in einer Ebene (P2) ausgeführt wird, die im Wesentlichen zu der Schwenkebene (P1) senkrecht ist.

3. Schwenkverfahren nach Anspruch 1, bei dem der Winkelversatz (A) gemäß mehreren Winkeln ausgerichtet ist und/oder die Verbindung (4) teleskopisch ist, um sich an eine gegebene Konfiguration zum Zugang auf Entfernung anzupassen.

4. Schwenkwerkzeug für das Umsetzen des Verfahrens nach einem der Ansprüche 1 bis 3, wobei das Schwenkwerkzeug einen Kopf (41) aufweist, der mit einem Hebelarm (410) versehen ist, der in einer Schwenkebene (P1) schwenken kann, einen ersten Stangenabschnitt (42), der mit dem Kopf (41) gekoppelt ist, einen Krümmer (43), der den ersten Abschnitt (42) mit einem zweiten Stangenabschnitt (44) verbindet und einen Winkel (A) zwischen den Abschnitten (42, 44) in einer Ebene (P2) bildet, die von der Schwenkebene (P1) unterschiedlich ist, einen Steuerschaft (45), der beweglich auf dem zweiten Abschnitt (44) eingreift, und ein elastisches Mittel (46), das den Steuerschaft (45) mit dem Hebelarm (410) über eine Führungsverbindung (421), die fest mit dem ersten Abschnitt (42) verbunden ist, verbindet.

5. Schwenkwerkzeug nach dem vorhergehenden Anspruch, bei dem der Hebelarm (410) einen Stiel (411) aufweist, der mit einem zentralen Träger (412), der auf einer Achse (451) zwischen zwei Führungskufen (421) des Trägers (412) drehend montiert ist, gekoppelt ist.

6. Schwenkwerkzeug nach dem vorhergehenden Anspruch, bei dem der Träger (412) mit einer Teflonbeschichtung überzogen ist, um das zu schwenkende Element (30) nicht zu beschädigen.

7. Schwenkwerkzeug nach einem der Ansprüche 4 bis 6, bei dem der Krümmer aus zwei röhrenförmigen Teilen (435, 436) und mit im Wesentlichen gleichen Längen besteht, wobei diese röhrenförmigen Teile untereinander einen bestimmten Versatzwinkel (D) bilden, wobei jeder Krümmerteil (435, 436) an jeden entsprechenden Stangenabschnitt (42, 44), mit dem er durch abnehmbare Blockierungsmittel (431, 432) in Verbindung steht, angepasst ist.

8. Schwenkwerkzeug nach dem vorhergehenden Anspruch, bei dem die Stangenabschnitte (42, 44) und die entsprechenden Krümmerteile (435, 436) Löcher (5, 5') auf ringförmigen Abschnitten aufweisen, wobei sich diese Löcher überlagern, wenn die Stangenabschnitte (42, 44) und die Krümmerteile (435, 436) in Verbindungsnennposition sind, und Stifte (431, 432), die als abnehmbare Blockierungsmittel dienen, quer durch einen Satz Löcher (5, 5'), die einander diametral gegenüberliegen, eingeführt werden, um die Stangenabschnitte gemäß einem Krümmerwinkel (A) zu blockieren.

9. Schwenkwerkzeug nach dem vorhergehenden Anspruch, bei dem mindestens zwei Sätze Löcher (5, 5') auf mindestens einem Krümmerteil (435) und dem entsprechenden Stangenabschnitt (42) vorgesehen sind, um die Ausrichtung des Versatzes (D) zu variieren.

10. Schwenkwerkzeug nach einem der Ansprüche 4 bis 8, bei dem die Krümmerteile (437, 438) untereinander um eine Achse (Z'Z) einer Schrauben-/Mutterverbindung (47, 48) angelenkt sind, um den Versatzwinkel (D) zu variieren und einen bestimmten Versatzwinkel durch Festziehen zu blockieren.

11. Schwenkwerkzeug nach einem der Ansprüche 4 bis 8, bei dem die Krümmerteile untereinander durch eine Kugelgelenkverbindung angelenkt sind, die durch Backen gemäß jeder vorbestimmten Ausrichtung in einem gegebenen Raumwinkel blockiert werden kann.

## Claims

1. A method for remotely pivoting an element (30) mounted in a structure (3), consisting in exerting a lever effect (410) on the element by way of a control (46) bearing on the structure (3) coupled to a connection (4) engaged with the element (30) to cause it to pivot in a pivoting plane (P1) and in applying an angular offset (A) to this connection (4) in a plane (P2) different from the pivoting plane (P1), in which the lever effect (410) is produced, in order to render the control (46) remotely operable.

2. The pivoting method according to claim 1, wherein the angular offset (A) is produced in a plane (P2) substantially perpendicular to the pivoting plane (P1).

3. The pivoting method according to claim 1, wherein the angular offset (A) is oriented in accordance with multiple angles and/or the connection (4) is telescopic to adapt to an access configuration at given distance.

4. A pivoting tool for implementing the method according to any one of claims 1 to 3, said pivoting tool including a head (41) provided with a lever arm (410) able to pivot in a pivoting plane (P1), a first rod section (42) coupled to the head (41), an elbow (43) connecting the first section (42) to a second rod section (44) and forming an angle (A) between the sections (42, 44) in a plane (P2) different from the pivoting plane (P1), a control rod (45) in mobile engagement with the second section (44) and flexible means (46) connecting the control rod (45) to the lever arm (410) via a guide connection (421) fastened to the first section (42).

5. The pivoting tool according to the precedent claim, wherein the lever arm (410) comprises a handle (411) coupled to a central support (412) mounted to rotate on a shaft (451) between two guide shoes (421) of the support (412).

6. The pivoting tool according to the precedent claim, wherein the support (412) is covered with a PTFE covering in order not to damage the element (30) to be pivoted.

7. The pivoting tool according to any one of claims 4 to 6, wherein the elbow is composed of two tubular parts (435, 436) of substantially equal length, these tubular parts forming between them a particular offset angle (D), each elbow part (435, 436) being fitted to each corresponding rod section (42, 44) to which it is connected by means of removable locking means (431, 432).

8. The pivoting tool according to the precedent claim, wherein the rod sections (42, 44) and the corresponding elbow parts (435, 436) have openings (5, 5') on annular portions, these openings being superposed when the rod sections (42, 44) and the elbow parts (435, 436) are in the nominal connection position, and pins (431, 432) serving as removable locking means being introduced transversely through a set of diametrically opposite openings (5, 5') to lock the rod sections in accordance with an elbow angle (A).

9. The pivoting tool according to the precedent claim, wherein at least two sets of openings (5, 5') are provided on at least one elbow part (435) and the corresponding rod section (42) to vary the orientation of the offset (D).

10. The pivoting tool according to any one of claims 4 to 8, wherein the elbow parts (437, 438) are articulated to each other about an axis (Z'Z) of a nut-and-bolt connection (47, 48) to vary the offset angle (D) and to lock a particular offset angle by tightening it.

11. The pivoting tool according to any one of claims 4 to 8, wherein the elbow parts are articulated to each other by a ball-joint connection that can be locked by jaws with any predetermined orientation within a given solid angle.
